# EUROPEAN PATENT SPECIFICATION

(11) **EP 0 739 400 B1**
(45) Date of publication and mention of the grant of the patent: **13.03.2002**
(21) Application number: 94930414.1
(22) Date of filing: 08.09.1994
(51) Int. Cl.: C09K 5/00, C09K 5/06

(54) **NONAQUEOUS HEAT TRANSFER FLUID**
NICHT-WÄSSRIGE WÄRMETRÄGERFLÜSSIGKEIT
FLUIDE de tranfert de chaleur non-aqueux

(30) Priority: 10.09.1993 US 119514
(43) Date of publication of application: 30.10.1996
(73) Proprietor: EVANS COOLING SYSTEMS, INC., Sharon, CT 06069 (US)
(72) Inventor: EVANS, John, W., Sharon, CT 06069 (US)
(74) Representative: Hansen, Bernd, Dr. Dipl.-Chem.
(86) International application number: US9410040
(87) International publication number: WO9507323

(56) References cited:
- WO-A-89/09806
- US-A- 4 426 309
- US-A- 4 450 088
- US-A- 4 452 715
- US-A- 4 452 758
- US-A- 4 587 028
- US-A- 5 240 631

## Description

### BACKGROUND OF THE INVENTION

The present invention relates generally to a nonaqueous heat transfer fluid for use in a heat exchange system and, particularly, to a coolant for internal combustion engines.

The coolants that are currently used create continuing environmental problems and raise concerns about toxicity, health effects and disposal problems. In particular, toxicity leading to acute short term oral health effects of coolants upon humans and other mammals is problematic. In addition, chronic health problems associated with coolants often relate to contamination from elemental heavy metal precipitates.

Every year nearly 700 million gallons of antifreeze are sold in the U.S. alone, and about 1.2 billion gallons are sold worldwide. The problem of the inherent toxicity of currently used coolants is exacerbated by estimates that 25% to 50% of this volume is disposed of improperly. One major cause of this pollution is dumping by consumers. While increased consumer awareness can be achieved through education, improper disposal will remain a problem.

Another major source of improper disposal emanates from leakage, spills and overflows in the heavy duty truck and off-road vehicle industry. Experience with heavy duty vehicles shows that it is common to lose 10% of the coolant volume every 12,000 miles (≈19,312 km) to 18,000 miles (≈28,967 km). This equates to a leakage rate of one drop per minute, or one gallon per month for the typical highway truck. Even though a coolant leak this small is likely to go unnoticed, it can accumulate into a significant loss. For example, many heavy duty fleets never change coolant but purchase enough antifreeze for loss replacement every year to replace all of the coolant in each of their vehicles.

In some heavy-duty operations, overflows account for far more coolant loss than leaks at the water pump, hose clamps or radiator core. If a heavy-duty radiator without an overflow tank is topped off, a quart or more of coolant can be lost due to overflow from the coolant expanding upon heating up of the engine. It is to be noted that even if small spills and leaks of coolant biodegrade with little impact upon the environment, such leaks present a toxic danger to wildlife.

Current formulations of engine coolants typically utilize water as the primary heat removal fluid. The water content of a coolant is typically 40% to 70% by weight, depending upon the severity of the winter climate.

Another component of an engine coolant is a freeze point depressant. Currently, the freeze point depressant in most cases is ethylene glycol (EG), which is used in a range of 30% to 60% by volume to prevent freezing of the water during winter. In some warm weather areas, freezing temperatures are not encountered and water with only a corrosion inhibitor package is used.

Moreover, an additive package containing several different chemicals are initially added to the freeze point depressant to form an antifreeze concentrate, and eventually blended with water to form the coolant. These additives are designed to prevent corrosion, deposit formation and foaming, and are in concentrations of 0.5% to 3% by weight of the final coolant.

In addition, contaminants build up in the coolant as the engine is used and result from: thermal or oxidative breakdown of glycol, lube oil and fuel accumulation, or metal corrosion products from the cooling system components.

Finally, supplemental coolant additives are used in heavy duty service to prevent cavitation erosion of cylinder liners and to replenish inhibitor chemicals depleted with service. Supplemental coolant additives are not used or required in passenger cars which have a coolant life of 20,000 miles (32,186 km) to 30,000 miles (48,279 km). Heavy-duty service usually demands 200,000 miles (321,860 km) to 300,000 miles (482,790 km) before coolant replacement and hence the need to periodically replenish inhibitors. Examples of commonly used supplemental coolant additives include sodium nitrite, dipotassium phcsphate, sodium molybdate dihydrate, and phosphoric acid.

Supplemental coolant additives must be chemically balanced with the coolant volume, which is costly to administrate and can be catastrophic to the cooling system components, and the engine, if improperly done. If the amount of the supplemental coolant additives in the coolant is too low, corrosion and cavitation damage to the engine and cooling system components will occur, but if the amount is too high, additives will "fall-out" of solution and eventually clog radiator and heater cores. Another difficulty with supplemental coolant additives is that they are difficult to properly dissolve in an aqueous solution.

The acute oral toxicity of spent antifreeze is largely determined by the glycol used. Thus, additives and contaminants have a lesser effect on coolant toxicity. Regardless of size, spills and leaks can pose an acute oral toxicity danger to wildlife and pets.

Glycols make up 95% by weight of the antifreeze/coolant concentrate, and after blending with water, about 40% to 60% by volume of the coolant used in the vehicle. Conventional antifreeze has for years been formulated with EG (US-Patent No.5240631).

A major disadvantage of using EG as a freeze point depressant for engine coolants is its high toxicity to humans and other mammals if ingested. Toxicity is generally measured in accordance with a rating system known as the LD₅₀ rating syster, which is the amount of substance, when fed to laboratory rats in a single dose, which will cause an acute oral toxic poisoning. A lower LD₅₀ value indicates a higher toxicity. An LD₅₀ rating of less than or equal to 20.0 grams of substance per kilogram of body weight can classify a material as hazardous. Thus, because EG has an LD₅₀ rating of 6.1 g/kg, EG is hazardous by this rating system. Moreover, EG is a known toxin to humans at relatively low levels, reported as low as 0.398 g/kg. Consequently, EG is classified by many regulatory authorities as a dangerous material. When ingested, EG is metabolized to glycolic and oxalic acids, causing an acid-base disturbance which may result in kidney damage. EG also has the added complication of a sweet smell and taste thereby creating an attraction for animals and children.

In addition to the difficulties that arise from the use of EG, serious problems may result from the water fraction that is used in current coolant formulations. An EG-based concentrate requires 3% to 5% water content in order not to freeze at +7.7°F (≈-13.5°C). Water is also added to all known coolant concentrates so that additives can stay in suspension. One difficulty with the large water fraction of the diluted engine coolant, typically a 50/50 ratio of concentrate to water, is the emergence of precipitates of heavy metals, such as lead and copper contaminants, that dissolve in the water portion of the circulating coolant in the engine. The water reacts with lead and copper materials from radiators which are the source of not only brass, and thereby copper, but also lead solder.

Cooling systems contain many different metals and alloys, and corrosion of these metals by coolants has been unavoidable because of the inclusion of water with the diol-based antifreezes, such as ethylene glycol or propylene glycol. Corrosion occurs because of the formation of organic acids in the coolant, such as pyruvic acid, lactic acid, formic acid, and acetic acid. The organic diols produce acidic oxidation products when in the presence of hot metal surfaces, oxygen from either entrapped air or water, vigorous aeration, and metal ions, each of which catalyze the oxidation process. Moreover, formation of lactic acid and acetic acid is accelerated in coolant solutions at 200°F (≈93.3°C) or above while in the presence of copper. Formation of acetic acid is further accelerated in the presence of aluminum in coolant solutions at 200°F (≈93.3°C) or above.

Among the metals and alloys found in cooling systems, iron and steel are the most reactive in the formation of acids, whereas light metals and alloys, such as aluminum, are considerably less reactive. As the oxidation of the diols progresses, the level of organic acids formed with the water fraction rises and the pH of the coolant decreases, and therefore the corrosion of the metal surfaces increases. WO-A-8909806 discloses using propylene glycol, additives, phosphoric acid, and a water content under 10% by weight. US patent No. 5,240,631 discloses using propylene glycol, additives, phosphorous acid, and a water content of 1-5% by weight.

Currently utilized coolants include buffers to counteract these organic acids. The buffers act to create a coolant with a higher initial pH of approximately 10 or 11. Thus, as the oxidation occurs, the pH decreases accordingly. Some examples of typically utilized buffers include: sodium tetraborate, sodiun tetraborate decahydrate, sodium benzoate, phosphoric acid and sodium mercaptobenzothiazole. Examples of usage of buffers is found in WO-A-8909806 and US Patent No. 5,240,631.

Buffers, in turn,' also require water in order to enter into and remain in solution. As the buffer portion of the solution becomes depleted over time, the water fraction of the coolant reacts with the heat, air and metals of the engine, and as a result, the pH decreases because of the acids that form. Thus, corrosion remains a large problem in coolants that utilize water.

In fact, all known coolant formulations require the addition of water for additives used as buffers, anti-foam agents and for prevention of aluminum corrosion, to go into solution. Examples of such additives include phosphates, borates, silicates or phosphoric acids. In addition, these water soluble additives require heat, extreme agitation, and extensive tine for the water to react and cause the additives to dissolve.

All currently used and previously known coolants require inhibitors to control the corrosive effects from the required water content. The inhibitors must be balanced so that they do not react with each other because that would otherwise minimize their individual purposes. For instance, phosphates and borates would decrease the protection of silicates on aluminum. Moreover, the inhibitors must not be in an excess concentration, which is usually done to extend the depletion time, because that causes damage to system components. For example, "fall-out" from solution causes plugging of radiators and heaters. In addition, silicates, silicones, borates and phosphates are abrasive and erode heat exchanger tubes and pump impellers. Nevertheless, the inhibitors must still exist in a concentration which is adequate to protect all metals.

Thus, the additive package that is included in known coolant formulations typically consists of from 5 to 15 different chemicals. These additives are broken down into major and minor categories, depending upon the amount used in an engine coolant formulation:

| MAJOR (0.05% to 3%) | MINOR (<0.05%) |
|---|---|
| Buffer | Defoamer |
| Corrosion inhibitors | Dye |
| | Scale inhibitor |
| | Surfactant |
| | Chelates |

In addition, some of the additives themselves are considered toxic, such as borates, phosphates, and nitrites. Thus, not only do all known coolant formulations include additives that require heat, extreme agitation and extensive time for the water to react and cause the additives to dissolve, but the additives themselves are sometimes toxic. Further, the additives require complex balancing which accommodates the prevention of interference between the additives, while also preventing the excessive presence of any one additive in the coolant.

### SUMMARY OF THE INVENTION

The present invention solves the aforesaid problems by providing a propylene glycol (PG) based coolant that does not use water. The utilization of a water-free, or "neat," PG base liquid, as well as "neat" PG dissolvable corrosion inhibitors, allows the formulation of the present invention to require much less time to blend, to be lower in blending costs and to be less problematic. The invention creates a coolant with a stable solution of inhibitors which has a long term shelf life, is nonhazardous with low toxicity and will not freeze in a "neat" state, in either storage or in use.

A cooling system which utilizes the PG based coolant in accordance with the present invention can advantageously operate at a significantly lower pressure at or near ambient level, while also eliminating water. Not only does the system thereby allow for a simple and stable additive package, but the reduced pressure of the cooling system also eliminates stress on the components. The innate lubricous nature of the coolant of the present invention is benign to rubber, and allows the pump seals, hoses and system components to normally last 150,000 miles (241,395 km) or more, which dramatically lowers the loss of coolant to the environment because of leaks, while also decreasing overheating.

The lack of water in the formulated PG based coolant of the present invention also substantially reduces, and in most instances eliminates, the problem of contamination from precipitates of heavy metals, such as lead and copper. Thus, the nonaqueous nature of the present invention also decreases the toxicity level of the coolant.

Because the coolant of the present invention is initially free of water, and the system with which the coolant is used isolates the hot coolant from air and moisture, there is no major chemical reaction from which significant levels of acids may be formed. Since the two major catalysts for acid formation, air and water, are nonexistent at the outset, as well as through the life of the system, there is no reason to add buffering agents in the formulation of the coolant. Therefore, the need to raise the water content of the coolant for additive solubility is eliminated, because only PG soluble additives need to be employed. Further, the coolant formulation of the present invention can accommodate the existence of water, preferably below a concentration of 0.25% by weight, as an impurity, and during use water can be permitted in concentrations of preferably below about 5.0% by weight, without requiring any buffering agents.

The water-free nature of the coolant formulation and system operation of the present invention also eliminates other water, air, heat and metal based reactions and their water soluble additives. The reactions and additives that are eliminated include:
1. Anti-foam reactions/Silicones and polyglycol additives,
2. Aluminum corrosion/Silicates,
3. Cavitation corrosion/Nitrites,
4. Scale inhibitors/Polyacrylates, and
5. Anti-fouling/Detergents.

Whereas the water soluble additives of known coolants require heat, extreme agitation and extensive time for the water to react and cause the additives to dissolve, the present invention utilizes a preferred additive package of three PG liquid soluble additives which do not require water to enter into or remain in solution, require no heat and only a short amount of time to dissolve, with only slight agitation needed.

Recycling of the coolant of the present invention is easier and less costly than in known coolant formulations. During recycling, distillation of aqueous coolants is costly and time consuming. Because water is restricted to minimal amounts in the present invention, the requirement of distilling out the water fraction is substantially reduced or eliminated. Thus recycling of the present invention simply involves filtering out suspended solids and old additives, with distillation requirements greatly reduced or eliminated.

The present invention is also more conducive to storage. Aqueous coolants and additives suffer from "fall-out" of additives during extended storage, but the additives of the present invention, which do not require water to remain in solution, can be maintained in long periods of storage without the need for periodic agitation.

### DETAILED DESCRIPTION OF THE PREFERRED EMBODIMENT(S)

PG is chosen as the nonaqueous heat transfer base liquid. PG has an LD₅₀ rating of 33.7 g/kg and is therefore nonhazardous. Moreover, PG has an acrid taste and smell and is thus not attractive to animals. PG provides a lower freezing point than EG and does not require the presence of water to function as a freeze point depressant. PG freezes at -76°F (-60°C), whereas EG freezes at 7.7°F (-13.5°C).

Although the preferred embodiment of the invention solely utilizes PG as the nonaqueous heat transfer base liquid, PG could be used in combination with EG. The use of EG in a mixture with PG, however, is not as beneficial as using PG alone because of increased toxicity. However, in order to retain the present invention's other characteristics, the mixture must contain at least 40% PG. A coolant utilizing such a mixture would retain some of the characteristics of the preferred embodiment, but would be more toxic and hazardous. Other glycols are much more toxic than PG. Diethylene glycol, dipropylene glycol, triethylene glycol, tripropylene glycol, and ethylene glycol have LD₅₀ ratings or 16.6 g/kg, 14.8 g/kg, 22.0 g/kg, 3.0 g/kg, and 6.1 g/kg; respectively.

In addition, because of the high temperatures that can exist in an engine, the boiling point of the base liquid is also an important factor in formulating a coolant. Propylene glycol has a satisfactory boiling point of 369°F (≈187.2°C), but the boiling point of ethylene glycol, 387.1°F (≈197.3°C), is at the upper limit for acceptable boiling points. If the boiling point is higher, then the coolant and critical engine metal temperatures can become too hot. Other glycols have much higher boiling points, which are too excessive. For instance, diethylene glycol has a boiling point of 472.6°F (≈244.8°C), dipropylene glycol has a boiling point of 447.8°F (≈231°C), triethylene glycol has a boiling point of 545.9°F (≈285.5°C), and tripropylene glycol has a boiling point of 514.4°F (≈268°C).

The instant invention also implements additives that are soluble in PG, and thus do not require water to enter into or remain in solution. In addition to being soluble in the PG, each chosen additive is a corrosion inhibitor for one or more specific metals. A nitrate compound, such as sodium nitrate, is utilized as an additive to inhibit corrosion for iron or alloys containing iron, such as cast iron. Although sodium nitrate's primary function is to prevent corrosion for cast iron, it also slightly inhibits solder and aluminum corrosion. An azole compound, such as tolyltriazole, functions as a corrosion inhibiting additive for both copper and brass. Moreover, tolyltriazole is also beneficial by slightly increasing the pH because of its basic effect. A molybdate compound, such as sodium molybdate, primarily functions as a corrosion inhibitor for lead from solder, but is also beneficial in decreasing corrosion for all other metals.

The choice of PG soluble additives thus depends on which metals are of concern with regards to corrosion. Currently, sodium nitrate, tolyltriazole and sodium molybdate would all be required because of the presence of the particular metals currently in use in cooling system components. However, an additive could be reduced or eliminated if the particular metal it acts on behalf of is eliminated. For example, if lead-based solder is eliminated, then the content of sodium molybdate could be reduced, or would not be required at all.

The additives can be present in a range from about a concentration of 0.05% by weight to 5.0% by weight, and more preferably not above 3.0% by weight. Solutions below 0.1% by weight are not as effective for long life inhibition, while solutions over 5.0% will suffer "fall-out." In the preferred embodiment, each additive is present in a concentration of about 0.3% by weight.

Another attribute of the present invention is that neither magnesium nor aluminum corrosion occur, and additives for these purposes are therefore eliminated. Light alloys will not corrode with PG.

These three additives exhibit many advantages. For instance, the additives are not rapidly depleted and may be formulated to last heretofore unobtainable service periods, without change of additive replenishment for up to about 10,000 hours or 400,000 miles (643,720 km) in many forms of engines and vehicles. Another advantage of these PG liquid soluble additives which do not require water is that the additives go into suspension readily and remain in suspension, even in extreme concentrations, without falling out of solution, when each additive is present in concentrations of up to 5.0% by weight. Moreover, a significant degrading effect does not exist when the additives interact with each other. In addition, the additives are not abrasive, and the additives and coolant protect all metals, including magnesium, for a minimum of 4,000 hours or 150,000 miles (241,395 km).

The nonaqueous soluble additives in the present invention do not become depleted over extended hourly usage or mileage, and thus the need for supplemental coolant additives is ordinarily eliminated. Nevertheless, if it is desirable to add supplemental coolant additives, the nonaqueous formulation exhibits advantages because the supplemental coolant additives will more readily enter stable suspension with the present invention than in aqueous coolants. Moreover, the proper balance of supplemental coolant additives is easier to maintain, with a broad possible range of concentrations from about 0.05% by weight to 5.0% by weight.

For purposes of this invention, "nonaqueous". means water is present in the coolant formulation, in no greater than a concentration of 0.5% by weight. Although an increase in water is not desired during use, the present invention can accommodate the presence of some water. Because PG is a hygroscopic substance, water can enter the coolant from the atmosphere, or water can escape from the combustion chamber into the coolant from a combustion gasket leak into the cooling chamber. Although the essence of the invention is to avoid water, the invention will permit some water; however, increase of the water fraction during use is preferably restricted to below 5.0% by weight, and more preferably, below 2.0% by weight. Further, the invention and related cooling systems can tolerate water up to a maximum concentration of 10% by weight. However, the invention's attributes begin to diminish, especially beyond a 5% concentration.

The coolant of the present invention remains nonhazardous in use with low toxicity in preferred compositions containing more than about 84.5% PG. The corrosion inhibitors used are also listed as nonhazardous by the EPA. In addition, these additives are used, preferably, in a concentration at or below 0.3% by weight, which is considered nonhazardous by the EPA anyway. Furthermore, the water content is preferably below 0.25%, as formulated, and remains below 0.5% in use which eliminates the precipitates of heavy metals and causes the coolant to remain nonhazardous in use and thus may be disposed of as such.

Aqueous coolants cause violent vapor bubbles in the cooling system, and thus lead to high lead and copper erosion from reaction of water with the metals. However, the present invention's nonaqueous nature eliminates the vapor bubble and thus reduces the heavy metal precipitates. Moreover, tolyltriazole and sodium molybdate are utilized as corrosion inhibitors for these metals.

The elimination of water in the present invention relieves the coolant of catalysts that lead to acidic oxidation products. Not only is water itself involved in oxidation reactions in currently formulated coolants, but it is also a source for oxygen. Thus, if water is not present, or is at a minimal amount, corrosive effects on metals and alloys is dramatically reduced.

The pH scale reflects the acidity or alkalinity of an aqueous solution. Therefore, the pH scale is merely an indicator of acidity that will exist once water is present. Because the present invention avoids water, a coolant that would otherwise have a pH level as low as 3 or 4 when water is added would still not exhibit corrosive effects on the metals and alloys in the engine.

The preferred embodiment of the coolant formulation is as follows:

| | | % Weight |
|---|---|---|
| 1) | 1,2-propanediol, commonly known as propylene glycol (PG) | 84.50 - 99.85 |
| 2) | An azole inhibitor, such as tolyltriazole | 0.05 - 5.0 |
| 3) | A nitrate inhibitor, such as sodium nitrate | 0.05 - 5.0 |
| 4) | A molybdate salt, such as sodium molybdate | 0.05 - 5.0 |
| 5) | Water (as an undesired impurity) | 0.00 - 0.5 |

The following representative examples demonstrate the advantages of the present invention. The components of the present invention, "A," are first compared to the components of a conventional antifreeze, "B":

| Components | | "A" (Subject Coolant) | "B" (Conventional Antifreeze) |
|---|---|---|---|
| 1) | Glycol | | |
| | a. Propylene wt. % | > 99 | - |
| | b. Ethylene wt. % | - | 46.75 |
| 2) | Water wt. % | < 0.1 | 50.83 |
| 3) | Tolyltriazole wt. % | 0.3 | 0.1 |
| 4) | Sodium Nitrate wt. % | 0.3 | 0.05 |
| 5) | Sodium Molybdate wt. % | 0.3 | 0.05 |
| 6) | Sodium Metaborate wt. % | - | 0.5 |
| 7) | Sodium Hydroxide wt. % | - | 0.12 |
| 8) | Sodium Benzoate wt. % | - | 1.5 |
| 9) | Sodium Nitrite wt. % | - | 0.05 |
| 10) | Sodium Metasilicate wt. % | - | 0.1 |

### Example 1

### [ASTM #D-1384 (Modified)]

The first example examines a corrosion test for engine coolants in glassware. Description: Six specimens, typical of metals present in an engine coolant system, are totally immersed in the test coolant. Normally the coolant is aerated, by bubbling air up through the glassware, and kept at a test temperature of 190°F (88°C) for 336 hours. This test, however, and the results tabulated below. were performed with the following modifications to more effectively prove the benefits of the invention. Thus, both test coolants ("A" and "B") were operated at a control temperature of 215°F (101.6°C) to simulate severe duty use, and the subject coolant "A" was tested without aeration being applied in order to more closely approximate its operation in a nonaqueous cooling system as described in U. S. Patents 4,550,694, 4,630,572 and 5,031,579. However, the conventional antifreeze, coolant "B," was aerated in the normal manner of the #D-1384 test. At the completion of the test, corrosion was measured by weight loss of each metal specimen.

| Results | | | |
|---|---|---|---|
| [ASTM #D-1384 (Modified)] | | | |
| 1) Light Alloy Engines (Aluminum or Magnesium Head and Block) | | | |
| METAL | Δ WT "A" COOLANT (Mg) | Δ WT "B" COOLANT (Mg) | ASTM STD. |
| Magnesium | -1.3 | >-1,000 | - |
| Aluminum | +0.3 | -21.1 | -30 |
| Steel | -0.5 | - 3.9 | -10 |
| Copper | -3.7 | - 7.4 | -10 |
| Solder | -9.0 | -19.2 | -30 |
| Brass | -0.6 | - 5.1 | -10 |

| 2) Combined Alloy Engines (Aluminum [partial] with iron, or all iron) | | | |
|---|---|---|---|
| METAL | Δ WT "A" COOLANT (Mg) | Δ WT "B" COOLANT (Mg) | ASTM STD. |
| Cast Iron | +1.0 | - 6.2 | -10 |
| Aluminum | +2.0 | -18.6 | -30 |
| Steel | 0 | - 4.3 | -10 |
| Copper | -3.0 | - 8.9 | -10 |
| Solder | -6.1 | -19.7 | -30 |
| Brass | 0 | - 4.7 | -10 |

The results with a positive gain in weight occur because of plating out of transients from the other specimens used in the test, and those metals that gained the transient weight virtually did not lose any weight due to corrosion themselves.

### Example 2

### [ASTM #D-4340 (modified)]

This example examines corrosion of cast aluminum or magnesium alloys in engine coolants under heat rejecting conditions. Description: A cast aluminum alloy specimen, typical of that used for engine cylinder heads, or blocks, is exposed to an engine coolant solution temperature at 275°F (135°C) and at a pressure of 28 psi (193 kPa). An ASTM prescribed corrosive water is used to make up the water fraction of the 50/50 EG-water test coolant sample (Coolant "B"), which was not modified. The test is modified for the subject coolant sample (Coolant "A"), so as to simulate true operating conditions. Thus, not only is the use of corrosive water eliminated, which renders operation in a nonaqueous state, but the test pressure is also reduced to 2 psi (13.79 kPa), which is approximately ambient pressure.

A heat flux is established through the specimen and the test is carried out for one week, which is 168 hours. The heat transfer corrosion is measured by the weight change in the specimen, measured by the number of milligrams lost by the specimen. The test provides a critical evaluation of the coolant solution's ability to inhibit aluminum, as well as magnesium, corrosion at a heat rejecting surface.

| Results | | | |
|---|---|---|---|
| [ASTM #D-4340 (modified for Coolant "A"; 2 PSI)] | | | |
| METAL | Δ WT "A" COOLANT (Mg) | Δ WT "B" COOLANT (Mg) | ASTM STD. |
| Aluminum | 0.067 | 1.61 | < 2 |
| Magnesium | 0.18 | 5.79 | < 2 |

### Example 3

A 3.8L V-6 engine was operated "over the road" for a test period of 55,000 miles (88,511.5 km). The vehicle was configured to the specifications of the 5,031,579 patent and filled with subject coolant "A." There was no draining or replacing of the coolant during the test period. A metal specimen bundle was placed within the full flow of the engine coolant stream (lower hose) and was kept submerged in the coolant at all times. Performance of the test coolant's ability to inhibit metal corrosion was evaluated by comparing the results in milligrams lost of the specimen at the end of the test period to ASTM test standards.

| In Service Vehicle Test Results | | |
|---|---|---|
| (Road Operation of 55,000 miles (88,511.5 km)) | | |
| METAL | Δ WT "A" COOLANT (Mg) | ASTM STD. |
| Cast Iron | -2.8 | -10 |
| Aluminum | +0.2 | -30 |
| Steel | -1.1 | -10 |
| Copper | -1.3 | -10 |
| Solder | -3.7 | -30 |
| Brass | -0.9 | -10 |
| pH at start | +7.1 | NA |
| pH at finish | +6.9 | NA |

While the preferred embodiment of the invention has been disclosed, it should be appreciated that the invention is susceptible of modification without departing from the scope of the following claims.

## Claims

1. A heat transfer fluid composition for use in a heat exchange system, at least a portion of said heat exchange system having a first component that is formed of at least a first metal, said composition comprising a nonaqueous base liquid comprising at least 40% propylene glycol; and a first additive soluble in propylene glycol, said first additive inhibiting corrosion of said first metal with the proviso that said composition is non-buffered and has a water content of at or below 0.5 % by weight.

2. The heat transfer fluid composition of claim 1 wherein said metal contains iron and said additive is a nitrate compound.

3. The heat transfer fluid composition of claim 2 wherein said nitrate compound is sodium nitrate.

4. The heat transfer fluid composition of claim 1 wherein said metal is selected from the group consisting of copper and brass, and said additive is an azole compound.

5. The heat transfer fluid composition of claim 4 wherein said azole compound is tolyltriazole.

6. The heat transfer fluid composition of claim 1 wherein said metal contains lead, and said additive is a nolybdate compound.

7. The heat transfer fluid composition of claim 6 wherein said molybdate compound is sodium molybdate.

8. The heat transfer fluid composition of claim 1 wherein said nonaqueous base liquid comprises a mixture having a first component comprising at least 40% propylene glycol and a second component comprising ethylene glycol.

9. The heat transfer fluid composition of claim 1 wherein said heat exchange system further includes a second metal, and said composition further comprises a second additive that is soluble in propylene glycol which inhibits corrosion of said second metal.

10. The heat transfer fluid of claim 9 wherein said heat exchange system further includes a third metal, and said composition further comprises a third additive that is soluble in propylene glycol which inhibits corrosion of said third metal.

11. A heat transfer fluid composition for use in a heat exchange system comprising a nonaqueous base liquid comprising at least 40% propylene glycol and at least one of the following propylene glycol soluble additives selected from the group consisting of:
a molybdate salt;
a nitrate compound; and
an azole compound;
with the proviso that said composition is non-buffered and has a water content of at or below 0,5 % by weight.

12. The heat transfer fluid composition of claim 11 wherein said molybdate salt consists of sodium molybdate.

13. The heat transfer fluid composition of claim 11 wherein said nitrate compound consists of sodium nitrate.

14. The heat transfer fluid composition of claim 11 wherein said azole compound consists of tolyltriazole.

15. The heat transfer fluid composition of claim 11 wherein the propylene glycol is present in a concentration of 84.5% to 99.85%, said molybdate salt consists of sodium molybdate which is present in a concentration of 0.05% to 5.0% by weight, said nitrate compound consists of sodium nitrate which is present in a concentration of 0.050 to 5.0% by weight, and said azole compound consists of tolyltriazole which is present in a concentration of 0.05% to 5.0% by weight.

16. The heat transfer fluid composition of claim 11 wherein said propylene glycol is present in a concentration of greater than 99% by weight, said molybdate salt consists of sodium molybdate which is present in a concentration of 0.3% by weight, said nitrate compound consists of sodium nitrate which is present in a concentration of 0.3% by weight, and said azole compound consists of tolyltriazole, which is present in a concentration of 0.3% by weight.

17. The heat transfer fluid composition of claim 11 wherein said nonaqueous base liquid comprises a mixture having a first component comprising at least 40% propylene glycol and a second component comprising ethylene glycol.

## Patentansprüche

1. Flüssige Wärmeübertragungszusammensetzung zur Verwendung in einem Wärmeaustauschsystem, wobei mindestens ein Teil des Wärmeaustauschsystems einen ersten Bestandteil aufweist, der aus mindestens einem ersten Metall gebildet wird, wobei die Zusammensetzung eine nicht-wässrige Basisflüssigkeit umfasst, umfassend mindestens 40 % Propylenglykol; und ein erstes Additiv, das in dem Propylenglykol löslich ist, wobei das erste Additiv die Korrosion des ersten Metalls inhibiert, mit der Massgabe, dass die Zusammensetzung nicht gepuffert ist und einen Wassergehalt von bei oder unter 0,5 Gew.% aufweist.

2. Flüssige Wärmeübertragungszusammensetzung gemäss Anspruch 1, wobei das Metall Eisen enthält und wobei das Additiv eine Nitratverbindung ist.

3. Flüssige Wärmeübertragungszusammensetzung gemäss Anspruch 2, wobei die Nitratverbindung Natriumnitrat ist.

4. Flüssige Wärmeübertragungszusammensetzung gemäss Anspruch 1, wobei das Metall ausgewählt ist aus der Gruppe, bestehend aus Kupfer und Messing und wobei das Additiv eine Azolverbindung ist.

5. Flüssige Wärmeübertragungszusammensetzung gemäss Anspruch 4, wobei die Azolverbindung Tolyltriazol ist.

6. Flüssige Wärmeübertragungszusammensetzung gemäss Anspruch 1, wobei das Metall Blei enthält und wobei das Additiv eine Molybdatverbindung ist.

7. Flüssige Wärmeübertragungszusammensetzung gemäss Anspruch 6, wobei die Molybdatverbindung Natriummolybdat ist.

8. Flüssige Wärmeübertragungszusammensetzung gemäss Anspruch 1, wobei die nicht-wässrige Basisflüssigkeit eine Mischung umfasst, die einen ersten Bestandteil aufweist, umfassend mindestens 40 % Propylenglykol, sowie einen zweiten Bestandteil, umfassend Ethylenglykol.

9. Flüssige Wärmeübertragungszusammensetzung gemäss Anspruch 1, wobei das Wärmeaustauschsystem ausserdem ein zweites Metall enthält und wobei die Zusammensetzung ausserdem ein zweites Additiv umfasst, das in Propylenglykol löslich ist, das die Korrosion des zweiten Metalls inhibiert.

10. Flüssige Wärmeübertragungszusammensetzung gemäss Anspruch 9, wobei das Wärmeaustauschsystem ausserdem ein drittes Metall enthält und wobei die Zusammensetzung ausserdem ein drittes Additiv umfasst, das in Propylenglykol löslich ist und das die Korrosion des dritten Metalls inhibiert.

11. Flüssige Wärmeübertragungszusammensetzung zur Verwendung in einem Wärmeaustauschsystem, umfassend eine nicht-wässrige Basisflüssigkeit, umfassend mindestens 40 % Propylenglykol und mindestens eines der folgenden Propylenglykol-löslichen Additive, ausgewählt aus der Gruppe, bestehend aus:
einem Molybdatsalz;
einer Nitratverbindung; und
einer Azolverbindung;
mit der Massgabe, dass die Zusammensetzung nicht gepuffert ist und einen Wassergehalt von bei oder unterhalb von 0,5 Gew.% aufweist.

12. Flüssige Wärmeübertragungszusammensetzung gemäss Anspruch 11, wobei das Molybdatsalz aus Natriummolybdat besteht.

13. Flüssige Wärmeübertragungszusammensetzung gemäss Anspruch 11, wobei die Nitratverbindung aus Natriumnitrat besteht.

14. Flüssige Wärmeübertragungszusammensetzung gemäss Anspruch 11, wobei die Azolverbindung aus Tolyltriazol besteht.

15. Flüssige Wärmeübertragungszusammensetzung gemäss Anspruch 11, wobei das Propylenglykol in einer Konzentration von 84,5 bis 99,85 % vorliegt, wobei das Molybdatsalz aus Natriummolybdat besteht, das in einer Konzentration von 0,05 bis 5,0 Gew.% vorliegt, wobei die Nitratverbindung aus Natriumnitrat besteht, das in einer Konzentration von 0,05 bis 5,0 Gew.% vorliegt und wobei die Azolverbindung aus Tolyltriazol besteht, das in einer Konzentration von 0,05 bis 5,0 Gew.% vorliegt.

16. Flüssige Wärmeübertragungszusammensetzung gemäss Anspruch 11, wobei das Propylenglykol in einer Konzentration von mehr als 99 Gew.% vorliegt, wobei das Molybdatsalz aus Natriummolybdat besteht, das in einer Konzentration von 0,3 Gew.% vorliegt, wobei die Nitratverbindung aus Natriumnitrat besteht, das in einer Konzentration von 0,3 Gew.% vorliegt und wobei die Azolverbindung aus Tolyltriazol besteht, das in einer Konzentration von 0,3 Gew.% vorliegt.

17. Flüssige Wärmeübertragungszusammensetzung gemäss Anspruch 11, wobei die nicht-wässrige Basisflüssigkeit eine Mischung umfasst, die einen ersten Bestandteil aufweist, umfassend mindestens 40 % Propylenglykol, und einen zweiten Bestandteil, umfassend Ethylenglykol.

## Revendications

1. Composition de fluide de transfert de chaleur destinée à être utilisée dans un système d'échange de chaleur, au moins une partie dudit système d'échange de chaleur comprenant un premier composant qui est formé d'au moins un premier métal, ladite composition comprenant un liquide de base non aqueux comprenant au moins 40 % de propylène-glycol ; et un premier additif soluble dans le propylène-glycol, ledit premier additif inhibant la corrosion dudit premier métal, sous réserve que ladite composition soit non tamponnée et ait une teneur en eau égale ou inférieure à 0,5 % en poids.

2. Composition de fluide de transfert de chaleur suivant la revendication 1, dans laquelle le métal contient du fer et l'additif est un nitrate.

3. Composition de fluide de transfert de chaleur suivant la revendication 2, dans laquelle le nitrate est le nitrate de sodium.

4. Composition de fluide de transfert de chaleur suivant la revendication 1, dans laquelle le métal est choisi dans le groupe consistant en le cuivre et le laiton, et l'additif est un azole.

5. Composition de fluide de transfert de chaleur suivant la revendication 4, dans laquelle l'azole est le tolyltriazole.

6. Composition de fluide de transfert de chaleur suivant la revendication 1, dans laquelle le métal contient du plomb, et l'additif est un molybdate.

7. Composition de fluide de transfert de chaleur suivant la revendication 6, dans laquelle le molybdate est le molybdate de sodium.

8. Composition de fluide de transfert de chaleur suivant la revendication 1, dans laquelle le liquide de base non aqueux comprend un mélange comportant un premier constituant comprenant au moins 40 % de propylène-glycol et un second constituant comprenant de l'éthylène-glycol.

9. Composition de fluide de transfert de chaleur suivant la revendication 1, dans laquelle le système d'échange de chaleur comprend en outre un second métal, ladite composition comprenant en outre un second additif qui est soluble dans le propylène-glycol, qui inhibe la corrosion dudit second métal.

10. Fluide de transfert de chaleur suivant la revendication 9, dans lequel le système d'échange de chaleur comprend en outre un troisième métal, ladite composition comprenant en outre un troisième additif qui est soluble dans le propylène-glycol, qui inhibe la corrosion dudit troisième métal.

11. Composition de fluide de transfert de chaleur destinée à être utilisée dans un système d'échange de chaleur comprenant un liquide de base non aqueux comprenant au moins 40 % de propylène-glycol et au moins un des additifs suivants, solubles dans le propylène-glycol, choisis dans le groupe consistant en :
un molybdate ;
un nitrate ; et
un azole ;
sous réserve que ladite composition soit non tamponnée et ait une teneur en eau égale ou inférieure à 0,5 % en poids.

12. Composition de fluide de transfert de chaleur suivant la revendication 11, dans laquelle le molybdate consiste en molybdate de sodium.

13. Composition de fluide de transfert de chaleur suivant la revendication 11, dans laquelle le nitrate consiste en nitrate de sodium.

14. Composition de fluide de transfert de chaleur suivant la revendication 11, dans laquelle l'azole consiste en tolyltriazole.

15. Composition de fluide de transfert de chaleur suivant la revendication 11, dans laquelle le propylène-glycol est présent en une concentration de 84,5 % à 99,85 %, le molybdate consiste en molybdate de sodium qui est présent en une concentration de 0,05 % à 5,0 % en poids, le nitrate consiste en nitrate de sodium qui est présent en une concentration de 0,05 % à 5,0 % en poids, et l'azole consiste en tolyltriazole qui est présent en une concentration de 0,05 % à 5,0 % en poids.

16. Composition de fluide de transfert de chaleur suivant la revendication 11, dans laquelle le propylène-glycol est présent en une concentration supérieure à 99 % en poids, le molybdate consiste en molybdate de sodium qui est présent en une concentration de 0,3 % en poids, le nitrate consiste en nitrate de sodium qui est présent en une concentration de 0,3 % en poids et l'azole consiste en tolyltriazole, qui est présent en une concentration de 0,3 % en poids.

17. Composition de fluide de transfert de chaleur suivant la revendication 11, dans laquelle le liquide de base non aqueux comprend un mélange comprenant un premier constituant comprenant au moins 40 % de propylène-glycol et un second constituant comprenant de l'éthylène-glycol.
